(19) Europäisches Patentamt

European Patent Office

Office européen des brevets

(11) **EP 1 052 856 A2**

(12) **EUROPEAN PATENT APPLICATION**

(43) Date of publication:
 **15.11.2000 Bulletin 2000/46**

(51) Int. Cl.⁷: **H04N 9/31**

(21) Application number: **00109924.1**

(22) Date of filing: **10.05.2000**

(84) Designated Contracting States:
 **AT BE CH CY DE DK ES FI FR GB GR IE IT LI LU MC NL PT SE**
 Designated Extension States:
 **AL LT LV MK RO SI**

(30) Priority: **11.05.1999 KR 9916746**

(71) Applicant:
 **SAMSUNG ELECTRONICS CO., LTD.
 Suwon-City, Kyungki-do (KR)**

(72) Inventor: **Park, Joon-chan
 Seoul (KR)**

(74) Representative:
 **Grünecker, Kinkeldey,
 Stockmair & Schwanhäusser
 Anwaltssozietät
 Maximilianstrasse 58
 80538 München (DE)**

(54) **Reflection type color projector**

(57)  A single plate, reflection type color projector in which the structure of splitting an incident light according to a color thereof is improved so that brightness of light projected to a screen is increased. A reflection type color projector includes a light source for generating and emitting light, a dichromatic mirror unit for splitting an incident light from the light source into first, second and third color lights and allowing the first through third color lights to proceed such that optical axes of the first through third color lights can be at different angles from one another, a polarization beam splitter for changing a proceeding path of light by transmitting or reflecting the incident first through third color lights split by the dichromatic mirror unit according to polarization components thereof, a microlens array for focusing each of the first through third color lights input via the polarization beam splitter by a unit pixel, a reflection type display device for generating a color image from the first through third color lights focused by the microlens array and reflecting the generated image toward the polarization beam splitter, and a projection lens unit for magnifying and projecting a color image input via the polarization beam splitter.

FIG. 3

EP 1 052 856 A2

**Description**

BACKGROUND OF THE INVENTION

1. Field of the Invention

The present invention relates to a reflection type color projector using a single panel, reflection type display device, and more particularly, to a reflection type color projector in which the structure of splitting an incident light according to a color thereof is improved so that brightness of light projected to a screen is increased.

2. Description of the Related Art

In general, a projector is an apparatus for providing an image by projecting an image generated by a display device to a screen using an additional light source. The projector is divided into a transmission type and a reflection type according to the type of display device.

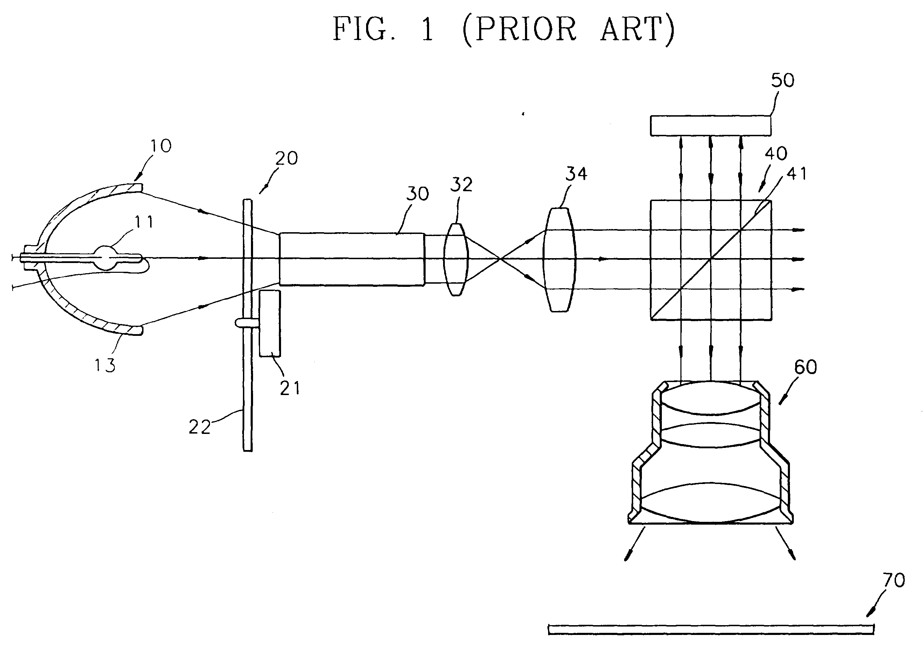

Referring to FIG. 1, a conventional single panel, reflection type color projector includes a light source 10 for generating and emitting light, a color wheel 20 for selectively transmitting a predetermined color of an incident light, a glass rod 30 for mixing an incident light to make a uniform light ray, a focusing lens 32, a collimating lens 34, a polarization beam splitter 40 for selectively reflecting or transmitting an incident light according to a polarization direction thereof, a reflection type display device 50 for generating an image by polarization modulation, and a projection lens unit 60 for projecting an incident light to a screen (not shown).

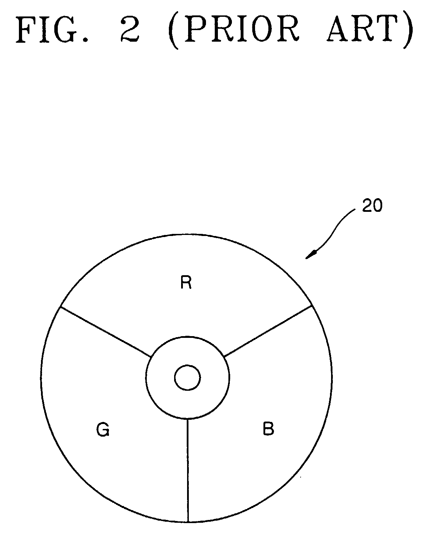

The light source 10 consists of a lamp 11 and a reflection mirror 13 for reflecting the light emitted from the lamp 11 and guiding a proceeding path of the reflected light. The color wheel 20 is installed to be capable of being rotated by a driving motor 21 on an optical path between the light source 10 and the glass rod 30. As shown in FIG. 2, the entire surface of the wheel 20 is sectioned equally into the colors of red (R), green (G) and blue (B). The focusing lens 32 magnifies the transmission width of light by focusing and diverging the light passing through the glass rod 30. The collimating lens 34 converges the input divergent light to make it a parallel beam.

The polarization beam splitter 40 is arranged on the optical path between the collimating lens 34 and the display device 50 and changes a proceeding path of an incident light by selectively transmitting or reflecting the incident light according to the polarization component of the incident light at a mirror surface 41 thereof. That is, the light output from the light source 10 is selectively transmitted or reflected according to the polarization component thereof, that is, a P polarized light or an S polarized light. The light input to the display device 50 is reflected again and input to the polarization beam splitter 40. Here, the effective light re-entering the polarization beam splitter 40 has a polarization component that has a directivity changed by 90° by the display device 50, and transmits the mirror surface 41 of the polarization beam splitter 40 and proceeds toward the projection lens unit 60. The light transmits the projection lens unit 60 and is projected to a screen 70.

As described above, the conventional reflection type color projector having the above structure represents color by providing the color wheel on the optical path so that three colors are sequentially emitted on the screen to form an image. Accordingly, as the transmittance of light at the color wheel is no more than 1/3 the amount of light emitted from the light source, the efficiency of light is lowered.

SUMMARY OF THE INVENTION

To solve the above, problem, it is an objective of the present invention to provide a reflection type color projector in which the three colors split from an incident light is simultaneously emitted to a screen to form an image.

Accordingly, to achieve the above objective, there is provided a reflection type color projector includes a light source for generating and emitting light, a dichromatic mirror unit for splitting an incident light from the light source into first, second and third color lights and allowing the first through third color lights to proceed such that optical axes of the first through third color lights can be at different angles from one another, a polarization beam splitter for changing a proceeding path of light by transmitting or reflecting the incident first through third color lights split by the dichromatic mirror unit according to polarization components thereof, a microlens array for focusing each of the first through third color lights input via the polarization beam splitter by a unit pixel, a reflection type display device for generating a color image from the first through third color lights focused by the microlens array and reflecting the generated image toward the polarization beam splitter, and a projection lens unit for magnifying and projecting a color image input via the polarization beam splitter.

BRIEF DESCRIPTION OF THE DRAWINGS

The above objective and advantages of the present invention will become more apparent by describing in detail a preferred embodiment thereof with reference to the attached drawings in which:

FIG. 1 is a view showing the optical arrangement of a conventional reflection type color projector;
FIG. 2 is a view showing the color wheel shown in FIG. 1;
FIG. 3 is a view showing the optical arrangement of a reflection type color projector according to a preferred embodiment of the present invention;

FIG. 4 is a magnified view of a microlens and a portion of a reflection type display device according to the present invention.

DETAILED DESCRIPTION OF THE INVENTION

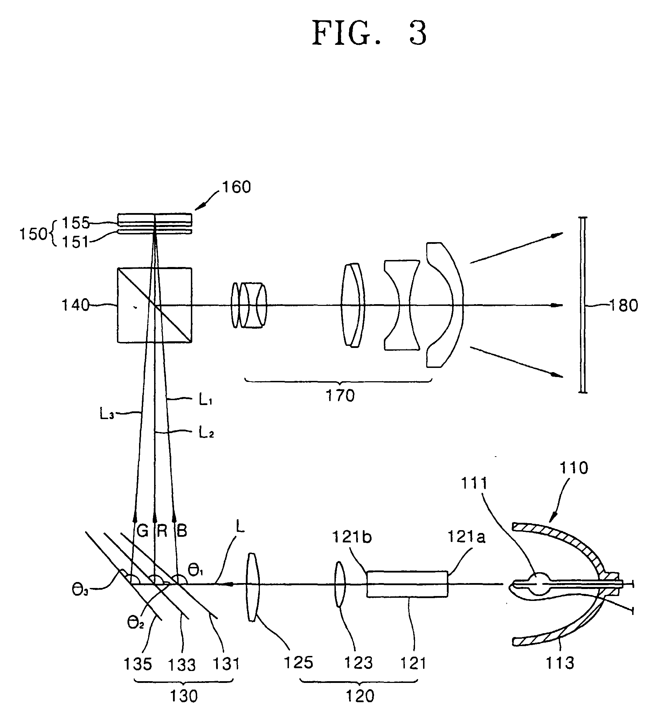

Referring to FIG. 3, a reflection type color projector according to a preferred embodiment of the present invention includes a light source 110 for generating and emitting light, a dichromatic mirror unit 130 for splitting an incident light L from the light source 110 into first, second and third color lights L1, L2 and L3, a polarization beam splitter 140 for changing a proceeding direction of an incident light by transmitting or reflecting according to the polarization component of the incident light, a microlens array 150 for focusing each of first through third color lights L1, L2 and L3 input after passing through the polarization beam splitter 140 by unit pixels, a reflection type display device 160 for generating a color image from the first through third color lights L1, L2 and L3 focused at the microlens array 150 and reflecting the generated color image toward the polarization beam splitter 140, and a projection lens unit 170 for magnifying and projecting the color image input via the polarization beam splitter 140.

The light source 110 includes a lamp 111 for generating light and a reflection mirror 113 for reflecting the light emitted from the lamp 111 and guiding the proceeding path thereof. The reflection mirror 113 is an oval mirror in which the position of the lamp 111 is one focus and the position where the light focuses is the other focus, or a parabolic mirror having one focus at the position of the lamp 111 and making the light reflected by the reflection mirror 113 a parallel beam.

Here, a uniform parallel beam illumination device 120 for making the light emitted from the light source 110 a parallel beam is preferably provided on an optical path between the light source 110 and the dichromatic mirror unit 130.

The uniform parallel beam illumination device 120 includes a glass rod 121 for making the light input from the light source 110 a uniform light by irregularly reflecting and mixing the light, an image lens unit 123 for focusing and diverging the light passing through the glass rod 121, and a collimating lens 125 for focusing the diverging light by the image lens unit 123 to make it a parallel beam. The glass rod 121 is cuboid having an incident surface 121a and an exit surface 121b perpendicular to the optical path. The aspect ratio of the exit surface 121b is proportional to that of the reflection type display device 160. When the glass rod 121 is adopted, the reflection mirror 113 is preferably an oval mirror.

Here, the glass rod 121 can be replaced by a pair of fly-eye lenses disposed to be adjacent to each other. In this case, it is preferable to use a parabolic mirror as the reflection mirror 113. The collimating lens 125 makes the light emitted from the light source 110 and proceeding toward the dichromatic mirror unit 130 a parallel beam.

The dichromatic mirror unit 130 includes first, second and third dichromatic mirrors 131, 133 and 135 for reflecting light in a particular wavelength area and transmitting light in the other wavelength area to split the input parallel beam L into the first, second and third color lights L1, L2 and L3, respectively. The split first through third color lights L1, L2 and L3 proceed toward the polarization beam splitter 140 at angles of their optical axes different from one another.

The first dichromatic mirror 131 is disposed forming an angle $\theta_1$ with an incident optical axis thereof with respect to a proceeding direction of the light reflected thereby. The first dichromatic mirror 131 reflects the first color light L1 of the incident light, for example, blue (B), but transmits the other color lights. The second dichromatic mirror 133 is disposed to the rear of the first dichromatic mirror 131 forming an angle $\theta_2$ with the incident optical axis thereof with respect to a proceeding direction of the light reflected thereby. The second dichromatic mirror 133 reflects the second color light L2 of the incident light, for example, red (R), but transmits the other color lights. The third dichromatic mirror 135 is disposed to the rear of the second dichromatic mirror 133 forming an angle $\theta_3$ with the incident optical axis thereof with respect to a proceeding direction of the light reflected thereby. The third dichromatic mirror 135 reflects the third color light L3 of the incident light, for example, green (G), but transmits the other color lights. Here, the third dichromatic mirror L3 may be replaced by a total reflection mirror so that all incident light can be reflected.

Preferably, $\theta_1$, $\theta_2$ and $\theta_3$ each are obtuse such that the optical axes of the first through third color lights L1, L2 and L3 respectively reflected by the first through third dichromatic mirrors 131,133 and 135 can converge at the reflection type display device 160, and satisfy Inequality 1 as follows.

$$\theta_1 > \theta_2 > \theta_3 \qquad \text{[Inequality 1]}$$

For the dichromatic mirror unit 130, the first through third dichromatic mirrors 131, 133 and 135 may be arranged to have a reflection property with respect to other color lights. Also, as the manufacturing process of the first through third dichromatic mirrors 131, 133 and 135 is well known in the field of applied optics, a detailed description thereof will be omitted.

As described above, by splitting the incident light L by each wavelength area using the dichromatic mirror unit 130, the first color light L1 reflected by the first dichromatic mirror 131 is used as an effective light and simultaneously the second and third color lights L2 and L3 passing through the first dichromatic mirror 131 and reflected by the second and third dichromatic mirrors 133 and 135, respectively, can be used as effective lights. Thus, the efficiency of light use can be improved three times compared to the conventional technology, by changing the conventional color wheel structure with the dichromatic mirror unit 130.

The polarization beam splitter 140 is arranged on the optical path between the dichromatic mirror unit 130 and the microlens array 150, and transmits lights of one polarization component of the first through third color lights L1, L2 and L3 split by the dichromatic mirror unit 130 to proceed toward the reflection type display deice 160 and the light having a polarization direction changed by the reflection type display device 160 of the first through third color lights L1, L2 and L3 reflected by the reflection type display device 160 to proceed toward the projection lens unit 170.

Although the present embodiment describes the use of the light reflected by the dichromatic mirror unit 130 and transmitting the polarization beam splitter 140 as an effective light, the configuration of an optical system can be changed to use the light reflected by the polarization beam splitter 140 can be used as the effective light.

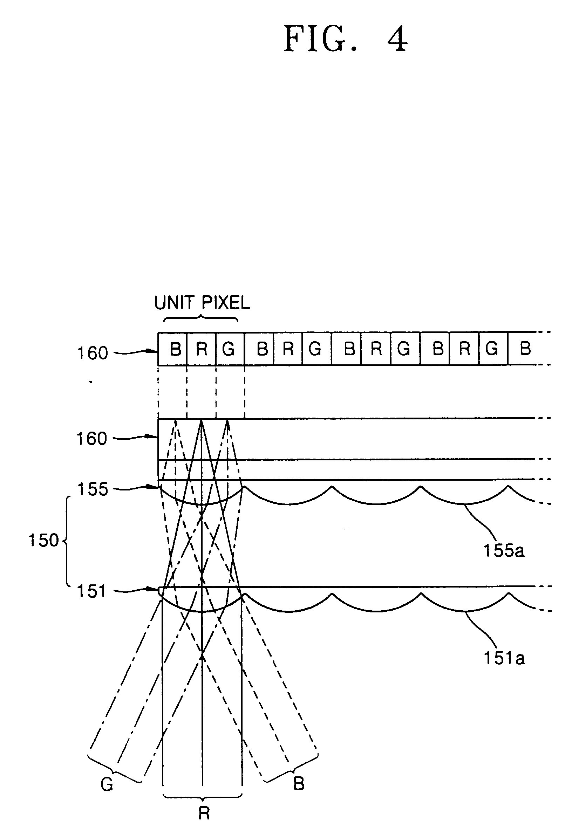

Referring to FIGS. 3 and 4, the microlens array 150 includes a first microlens array 151 and a second microlens array 155 installed between the first microlens array 151 and the reflection type display device 160. The first microlens array 151 includes a plurality of microlenses 151a corresponding to the number of unit pixels so that the input first through third color lights L1, L2 and L3 can be focused at each unit pixel of the reflection type display device 160. The second microlens array 155 is for making the optical axes of the first through third color lights L1, L2 and L3 by each unit pixel to be parallel to one another and simultaneously the first through third color lights L1, L2 and L3 to be vertically input to the reflection type display device 160.

Here, the unit pixel is a gathering of pixels for the respective first through third color lights L1, L2 and L3 and signifies a unit pixel forming a predetermined color by the combination of the first through third color lights L1, L2 and L3.

The reflection type display device 160 preferably includes a liquid crystal display (LCD). The LCD includes a plurality of pixels having a two-dimensional array structure, each of which being independently driven. In the LCD, each pixel is independently driven according to input video signals to change an incident light to a linear polarization light having the same polarization direction as an incident light or other polarization direction and to proceed toward the polarization beam splitter 140.

The projection lens unit 170 is arranged between the polarization beam splitter 140 and the screen 180 to magnify and project the light input via the reflection type display device 160 toward the screen 180.

As described above, in the reflection type color projector according to the present invention, as the light emitted from the light source can be split into the first to third color lights without loss of light through the dichromatic mirror unit, the efficiency of light use can be drastically increased.

**Claims**

1. A reflection type color projector comprising:

   a light source for generating and emitting light;
   a dichromatic mirror unit for splitting an incident light from the light source into first, second and third color lights and allowing the first through third color lights to proceed such that optical axes of the first through third color lights can be at different angles from one another;
   a polarization beam splitter for changing a proceeding path of light by transmitting or reflecting the incident first through third color lights split by the dichromatic mirror unit according to polarization components thereof;
   a microlens array for focusing each of the first through third color lights input via the polarization beam splitter by a unit pixel;
   a reflection type display device for generating a color image from the first through third color lights focused by the microlens array and reflecting the generated image toward the polarization beam splitter; and
   a projection lens unit for magnifying and projecting a color image input via the polarization beam splitter.

2. The reflection type color projector as claimed in claim 1, wherein the dichromatic mirror unit comprises:

   a first dichromatic mirror disposed to be inclined at an angle $\theta_1$ with respect to an incident optical axis in a direction in which a reflected light proceeds for reflecting the first color light of the incident light and transmitting the other lights;
   a second dichromatic mirror disposed to the rear of the first dichromatic mirror to be inclined at an angle $\theta_2$ with respect to the incident optical axis in a direction in which a reflected light proceeds for reflecting the second color light of the incident light and transmitting the other lights; and
   a third dichromatic mirror disposed to the rear of the second dichromatic mirror to be inclined at an angle $\theta_3$ with respect to the incident optical axis in a direction in which a reflected light proceeds for reflecting the third color light of the incident light.

3. The reflection type color projector as claimed in claim 1, wherein the angles $\theta_1$, $\theta_2$ and $\theta_3$ are obtuse

and satisfy the following Inequality

$$\theta_1 > \theta_2 > \theta_3.$$

4. The reflection type color projector as claimed in claim 1, wherein the microlens array comprises:

   a first microlens array formed of a plurality of microlenses corresponding to the number of the unit pixels so that the input first through third color lights can be focused by the unit pixel; and
   a second microlens array disposed between the first microlens array and the reflection type display device and formed of a plurality of microlenses corresponding to the number of the unit pixels so that the optical axes of the first through third color lights by each unit pixel can be vertically input to the reflection type display device.

5. The reflection type color projector as claimed in claim 1, further comprising a uniform parallel beam illumination device disposed on the optical path between the light source and the dichromatic mirror unit for making the light emitted from the light source to a uniform parallel beam.

6. The reflection type color projector as claimed in claim 5, wherein the uniform parallel beam illumination device comprises a glass rod for irregularly reflecting and mixing the incident light from the light source to make a uniform light;

   an image lens unit for focusing and diverging the light passing through the glass rod; and
   a collimating lens for focusing the divergent light by the image lens to make the focused light a parallel beam.

# FIG. 1 (PRIOR ART)

EP 1 052 856 A2

# FIG. 2 (PRIOR ART)

# FIG. 3

# FIG. 4